# EUROPÄISCHE PATENTSCHRIFT

(11) **EP 1 464 935 B1**
(45) Veröffentlichungstag und Bekanntmachung des Hinweises auf die Patenterteilung: **24.11.2010**
(21) Anmeldenummer: 03027220.7
(22) Anmeldetag: 28.11.2003
(51) Int. Cl.: G01L 3/10

(54) **Vorrichtung zum Bestimmen eines auf eine Welle ausgeübten Drehmoments**
Apparatus for determining the torque applied to a shaft
Appareil pour détecter le couple de rotation d'un arbre rotatif

(30) Priorität: 04.04.2003 DE 10316124
(43) Veröffentlichungstag der Anmeldung: 06.10.2004
(73) Patentinhaber: Valeo Schalter und Sensoren GmbH, 74321 Bietigheim-Bissingen (DE)
(72) Erfinder: Fröhlich, Ekkehart, 74226 Nordheim (DE); Jerems, Frank, Dr., 74369 Löchgau (DE); Proft, Matthias, 74936 Siegelsbach (DE); Rachui, Dirk, 74321 Bietigheim-Bissingen (DE); Schoepe, Roman, 74231 Bietigheim-Bissingen (DE)
(74) Vertreter: Pothmann, Karsten

(56) Entgegenhaltungen:
- WO-A-02/071019
- DE-A- 10 222 118
- DE-U- 20 305 732
- GB-A- 588 677
- US-A- 5 818 223
- US-A1- 2003 037 622

## Beschreibung

Die Erfindung betrifft eine Vorrichtung zum Bestimmen eines auf eine Welle ausgeübten Drehmoments, wobei die Welle einen ersten Wellenabschnitt und einen zweiten Wellenabschnitt aufweist und die beiden Wellenabschnitte gegeneinander verdrehbar sind, mit einem den ersten Wellenabschnitt umgebenden und mit diesem verbundenen Multipol-Magnetring und einem am zweiten Wellenabschnitt befestigten Statorhalter, wobei am Statorhalter zwei Statorelemente befestigt sind und jedes Statorelement in axialer oder radialer Richtung abragende Finger aufweist, die gleichmäßig zumindest über einen Teil des Umfangs verteilt angeordnet sind und zwischen sich Lücken aufweisen, wobei die Finger eines jeden Statorelements über einen Magnetflussring miteinander verbunden sind, die Magnetflussringe einen Abstand zueinander aufweisen und zwischen den Magnetflussringen ein Magnetfeldsensor angeordnet ist, wobei dem Magnetfeldsensor wenigstens ein Magnetflusskonzentrator zugeordnet ist.

Aus der US 4,984,474 ist ein Drehmomentsensor bekannt, der im wesentlichen von einem oder mehreren Magnetringen und zwei Statorelementen gebildet wird, die jedoch eine geringe Polzahl aufweisen. Die geringe Polzahl besitzt den Nachteil, dass dem vom Sensor gemessenen Signal beim Drehen der Lenkwelle eine Welligkeit aufmoduliert wird, welche nur durch geeignete elektronische Addition zweier um eine halbe Polbreite versetzter Signale beziehungsweise durch komplett ringförmig ausgebildete Flusssammelringe kompensiert werden kann. Weiterhin ist ein derart aufgebauter Drehmomentsensor relativ empfindlich und störanfällig, da der Magnetflusskonzentrator radial außerhalb der Statoren angebracht ist. Ferner weist ein derartiger Aufbau eine große Empfindlichkeit gegen Rundlauftoleranzen auf. Schließlich besitzen die Statoren Abstandshalter, die von separaten Ringen gebildet werden, wodurch der Aufbau relativ komplex wird.

Aus der FR 2,821,668 A1 ist eine Vorrichtung bekannt, bei welcher der Sensor aus einem diskret aufgebauten Multipolmagnetring und zwei ineinander geschachtelten weichmagnetischen Statoren besteht. Diese Statoren besitzen auf der radialen Innenseite fingerförmige Strukturen, welche die Magnetpole abtasten, sowie auf der radialen Außenseite einen ringförmigen Spalt, in welchem sich ein ortsfester Magnetfeldsensor befindet.

Die Polteilung muss durch diskreten Aufbau des Magnetrades relativ grob gewählt werden (Polbreite 20°), was einen ebenso großen Linearitätsbereich bewirkt, der aber nicht vollständig ausgenutzt wird, da der Bereich des zu messenden Winkels aufgrund der geforderten Steifigkeiten des Torsionssystem nur etwa ± 3° bis 5° beträgt. Der Magnetfluss kann nicht optimal ausgenutzt werden, da der den magnetischen Rückschluss bildende Luftspalt über den gesamten Umfang gleich ausgebildet ist, so dass sich der Magnetfluss auf eine große Fläche verteilt und deshalb am Ort des Magnetfeldsensors nur relativ gering ist.

Trotz Verwendung hochremanenter Magnete weist diese Vorrichtung eine geringe Empfindlichkeit auf wohingegen die Abhängigkeit des Messsignals von mechanischen Toleranzen, wie die Breite des Luftspaltes, in dem die Flussdichte gemessen wird, sehr groß ist.

Aus der DE 102 22 118 A1 sind Bauformen mit ringförmigen, an der Außenseite der Statoren oder Magnetjoche angeordneten Flussleitern oder Magnetflusssammelringen bekannt. Als nachteilig wird angesehen, dass die Flussleiter aufwendig aufgebaut sind und nicht alle Einflüsse von Radial- und Axialtoleranzen der Statoren ausgleichen können.

Bei der Herstellung und Montage der den Magnetfluss leitenden Bauteile, insbesondere der Statoren, sind mechanische Toleranzen nicht zu vermeiden. Bei allen bisher bekannten Bauformen können sich diese Toleranzen direkt auf die Größe von im magnetischen Kreis liegenden Luftspalten und damit störend auf das Messsignal auswirken und somit zu einer verminderten Genauigkeit bzw. zu Fehlmessungen führen.

Der Erfindung liegt daher die Aufgabe zugrunde, eine Vorrichtung der eingangs genannten Art derart weiterzubilden, dass sich die Toleranzen weniger stark auf das Messergebnis auswirken.

Diese Aufgabe wird erfindungsgemäß dadurch gelöst, dass der Magnetflusskonzentrator die Magnetflussringe umgreift.

Die ortsfest angebrachten Magnetflusskonzentratoren werden so ausgebildet, dass auf jeweils beiden Seiten der Magnetflussringe flusssammelnde Flächen vorhanden sind. Ein einzelner Magnetflusskonzentrator umgreift also den benachbarten Magnetflussring sowohl an der Innen- als auch an der Außenseite anstatt nur eine Seite abzutasten. Diese erfindungsgemäße Ausgestaltung hat den wesentlichen Vorteil, dass Toleranzen der Ebenheit oder des Planlaufs des Magnetflussringes ausgemittelt werden. Verringert sich der innenliegende Luftspalt zwischen Magnetflussring und Magnetflusskonzentrator, dann vergrößert sich gleichzeitig der zugehörige äußere Luftspalt. Da der Magnetfluss über beide Luftspalte geleitet wird, kompensieren sich beide Effekte.

Bei einer bevorzugten Weiterbildung der Erfindung umgreift der Magnetflusskonzentrator den Magnetflussring C-förmig. Dabei überlappen die freien Enden des Magnetflusskonzentrators den Magnetflussring auf beiden Seiten über eine radiale Länge von 20% bis 80%, insbesondere 30% bis 50%.

Mit Vorzug ist zwischen den Magnetflusskonzentratoren der Magnetflusssensor angeordnet. Hierdurch wird der Vorteil geschaffen, dass der Magnetfeldsensor zum einen gegen äußere Einflüsse abgeschirmt ist, zum anderen nahe zu den Magnetflusskonzentratoren liegt.

Eine weitere Optimierung wird dadurch erzielt, dass jedem Magnetflussring zwei oder mehr Magnetflusskonzentratoren zugeordnet sind. Dabei sind die mehreren Magnetflusskonzentratoren gleichmäßig über den Umfang des Magnetflussringes angeordnet. Dies hat den wesentlichen Vorteil, dass, zum Beispiel bei der Verwendung von zwei Magnetflusskonzentratoren, insgesamt zwei Magnetfeldsensoren eingesetzt werden können, wodurch ein redundantes Signal geliefert werden kann. Außerdem kann dadurch eine Signalmittelung erzielt werden.

Es besteht die Möglichkeit, dass der Magnetflusskonzentrator sich über einen Winkelbereich von 10° bis 180°, insbesondere über einen Winkelbereich von 25° bis 90°, über den Umfang des Magnetflussringes, erstreckt.

Eine Ausführungsform sieht vor, dass der Magnetflusskonzentrator in einem stationären Halter angeordnet ist. In diesem Halter können zusätzliche Elektronikbauteile, eine Platine hierfür, Steckkontakte und/oder Lötstützpunkte vorgesehen sein. Der Halter ist als separat handhabbare Baueinheit ausgebildet und wird an geeigneter Stelle mit den Statorelementen derart verbunden, dass die Statorelemente relativ beweglich zum Halter sind.

Um das Spiel zu den Magnetflussringen möglichst gering zu halten, stützt sich der Halter über ein Gleitlager am Statorhalter ab. Dieser direkte Kontakt erlaubt es, dass die Freiräume zwischen Magnetflussringen und Magnetflusskonzentratoren sehr klein gehalten werden können.

Eine leichte Montage wird dadurch erreicht, dass der Statorhalter am freien Ende des zweiten Wellenabschnitt auf einen Haltering aufklipsbar oder aufrastbar ist. Zum einen wird nicht nur die Montage erleichtert, sondern Reparatur- und Wartungsarbeiten können ebenfalls leicht durchgeführt werden.

Bei einer bevorzugten Ausführungsform sind die Magnetflusskonzentratoren ein Stanz-Biege-Blechteil. Derartige Stanz-Biege-Blechteil sind einfach und preiswert herstellbar, und bei einer alternativen Ausführungsform sind die Magnetflusskonzentratoren ein Sinterteil oder ein MIM-Teil (metal injection molding-Teil).

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im Einzelnen dargestellt sind. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung zeigen:
- Figur 1: einen Schnitt durch zwei Wellenabschnitte mit einer an deren Enden befestigten Vorrichtung zum Ermitteln eines Drehmoments;
- Figur 2: eine perspektivische Ansicht einer ersten Ausführungsform der erfindungsgemäßen Vorrichtung;
- Figur 3: einen Schnitt III-III gemäß Figur 2;
- Figur 4: eine Ansicht auf den radial innen liegenden Teil der beiden Statorelemente;
- Figur 5: eine Seitenansicht der erfindungsgemäßen Vorrichtung gemäß Figur 2
- Figur 6: eine Explosionsdarstellung der Vorrichtung gemäß Figur 5;
- Figur 7: eine perspektivische Ansicht einer weiteren Ausführungsform der Erfindung;
- Figur 8: eine Ansicht einer anderen Ausführungsform der erfindungsgemäßen Vorrichtung gemäß Figur 4;
- Figur 9: einen Magnetflusskonzentrator in perspektivischer Darstellung; und
- Figur 10: Ansicht einer weiteren Ausführungsform der erfindungsgemäßen Vorrichtung gemäß Figur 4.

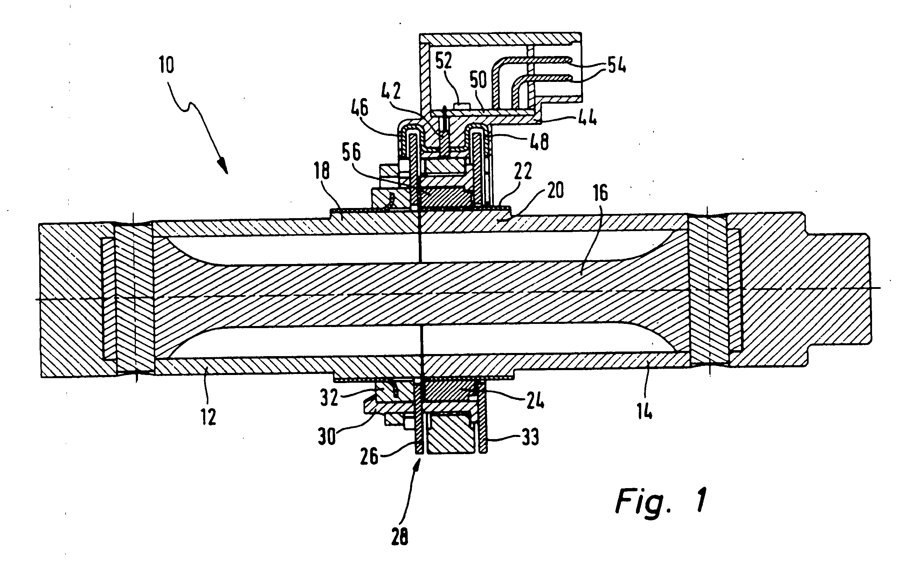

Die Figur 1 zeigt eine insgesamt mit 10 bezeichnete Lenkwelle eines Kraftfahrzeugs, von der zwei Wellenabschnitte 12 und 14 erkennbar sind. Die beiden Wellenabschnitte 12 und 14 sind über eine Torsionsstabfeder 16 miteinander verbunden, so dass die freien, einander zugewandten Enden 18 und 20 dann relativ zueinander verdreht werden, wenn auf die Lenkwelle 10 ein Drehmoment aufgebracht wird. Am Ende 20 des Wellenabschnitts 14 ist ein Magnetringhalter 22 befestigt, welcher einen insgesamt mit 24 bezeichneten Multipol-Magnetring trägt.

Dieser Magnetring 24 ist von einem insgesamt mit 28 bezeichneten Stator umgeben, der an einem Statorhalter 30 befestigt ist. Dieser Statorhalter 30 ist wiederum am freien Ende 18 des Wellenabschnitts 12 angebracht, wobei er mittels einer Rastvorrichtung mit einem Haltering 32 verrastet ist.

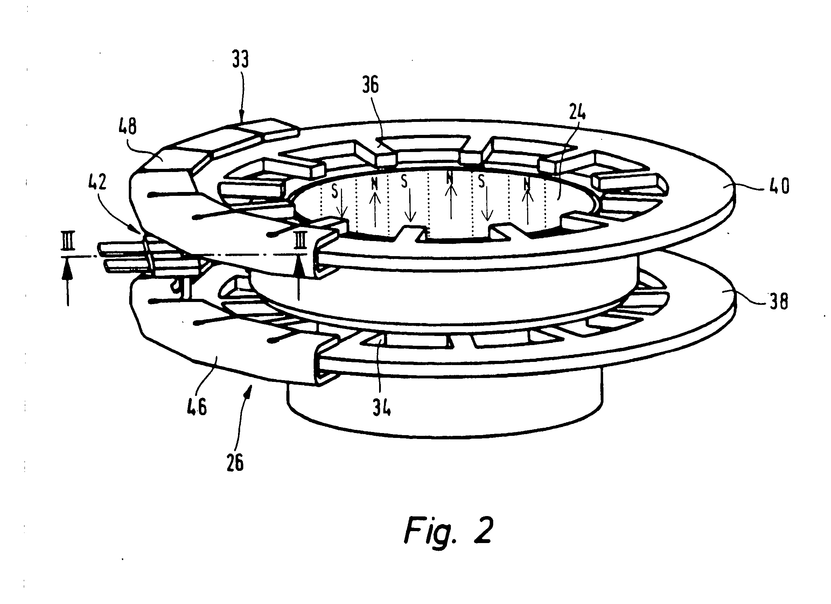

Am Statorhalter 30 sind ein erstes Statorelement 26 und ein zweites Statorelement 33 befestigt und umgreifen die Lenkwelle 10. Die beiden Statorelemente 26 und 33 stehen sich axial gegenüber und besitzen Finger 34 und 36 (Figur 2), die radial nach innen abragen. Die Finger 34 und 36 werden jeweils von einem Magnetflussring 38 und 40 getragen, der die Finger 34 und 36 umgibt und den in den Fingern 34 und 36 jeweils induzierten Magnetfluss in Richtung eines Magnetfeldsensors 42 leitet. Dieser Magnetfeldsensor 42 ist zwischen den beiden Magnetflussringen 38 und 40 angeordnet und wird von einem Sensorhalter 44 getragen. Außerdem ist deutlich in den Figuren 1 und 2 erkennbar, dass sowohl der Magnetflussring 38 als auch der Magnetflussring 40 jeweils von einem Magnetflusskonzentrator 46 und 48 umgriffen ist. Die beiden Magnetflusskonzentratoren besitzen eine im Wesentlichen C-förmige Ausgestaltung und erstrecken sich mit ihren freien Schenkeln auf beiden Seiten der Magnetflussringe 38 und 40. Die beiden Magnetflusskonzentratoren 46 und 48 werden ebenfalls vom Sensorhalter 44 getragen und in ihren Positionen bezüglich der beiden Magnetflussringe 38 und 40 gehalten.

Die Figur 1 zeigt ferner, dass im Sensorhalter 44 eine Platine 50 für Elektronikbauteile 52 untergebracht ist und dass Steckkontakte 54 vorgesehen sind, an denen Kabel angeschlossen werden können. Der Sensorhalter 44 stützt sich über ein Gleitlager 56 am Statorhalter 30 ab.

Die Figur 2 zeigt deutlich die Magnetisierung des Magnetringes 24, der zum Beispiel aus einem kunststoffgebundenen Magnetmaterial, welches gespritzt oder verpresst ist, besteht. Der Magnetring 24 ist axial mehrpolig magnetisiert, wobei die Pole so angeordnet sind, dass jedem Polpaar ein Finger 34 beziehungsweise 36 eines Statorelements 26 bzw. 33 zugeordnet ist und die Finger 34 und 36 am Übergang vom einen Polpaar zum anderen Polpaar stehen.

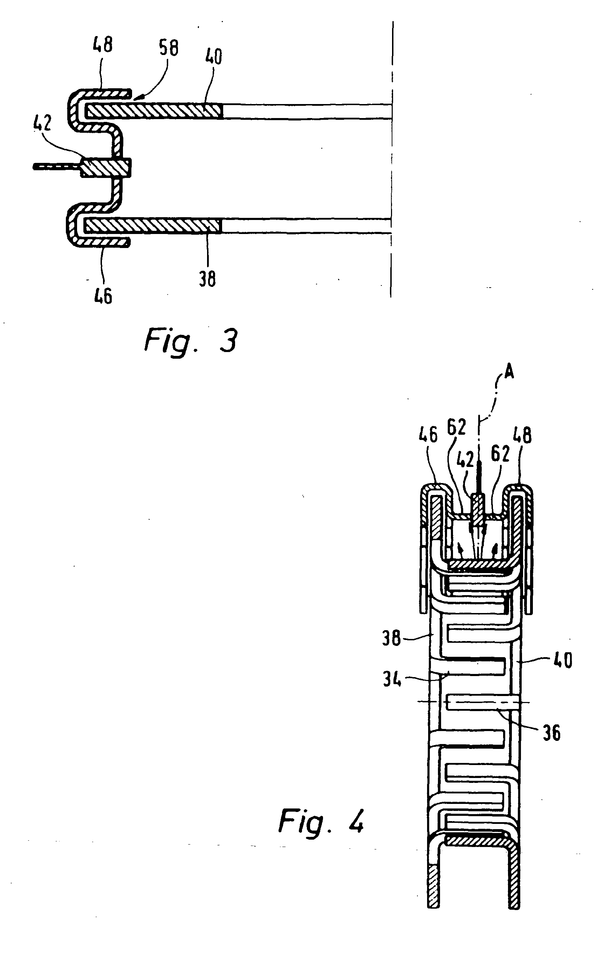

Die Figur 3, die einen Schnitt III-III gemäß Figur 2 zeigt, lässt deutlich erkennen, wie die beiden Magnetflussringe 38 und 40 von den beiden Magnetflusskonzentratoren 46 und 48 übergriffen sind. Dadurch werden Änderungen der zwischen den Magnetflusskonzentratoren 46 und 48 und den Magnetflussringen 38 und 40 sich befindenden Luftspalte 58 auf das Messergebnis vermieden. Verringert sich beispielsweise am einen Magnetflussring 38 beziehungsweise 40 der eine Luftspalt 58 durch eine Taumelbewegung des Magnetflussringes 38 oder 40, dann vergrößert sich gleichzeitig die Länge des zugehörigen anderen Luftspalts, wohingegen der insgesamt vom Magnetflusskonzentrator 46 beziehungsweise 48 gesammelte Magnetfluss konstant bleibt. Außerdem ist dies unabhängig davon, wie sich gleichzeitig der zweite Magnetflussring im anderen Magnetflusskonzentrator bewegt.

Die Figur 4 zeigt ein zweites Ausführungsbeispiel, bei welchem die Finger 34 und 36 in axialer Richtung abgebogen sind, wobei bei dieser Ausführungsform der Magnetring 24 radial mehrpolig magnetisiert ist. Auch hier ist jedem Polpaar ein Finger 34 beziehungsweise 36 zugeordnet und die Finger 34 und 36 befinden sich am Übergang vom einen Polpaar zum anderen Polpaar. Bei dieser Ausführungsform kann der Statorhalter 30 zusammen mit den Statorelementen 26 und 33 an dem Haltering 32 angespritzt sein anstatt aufgerastet zu werden.

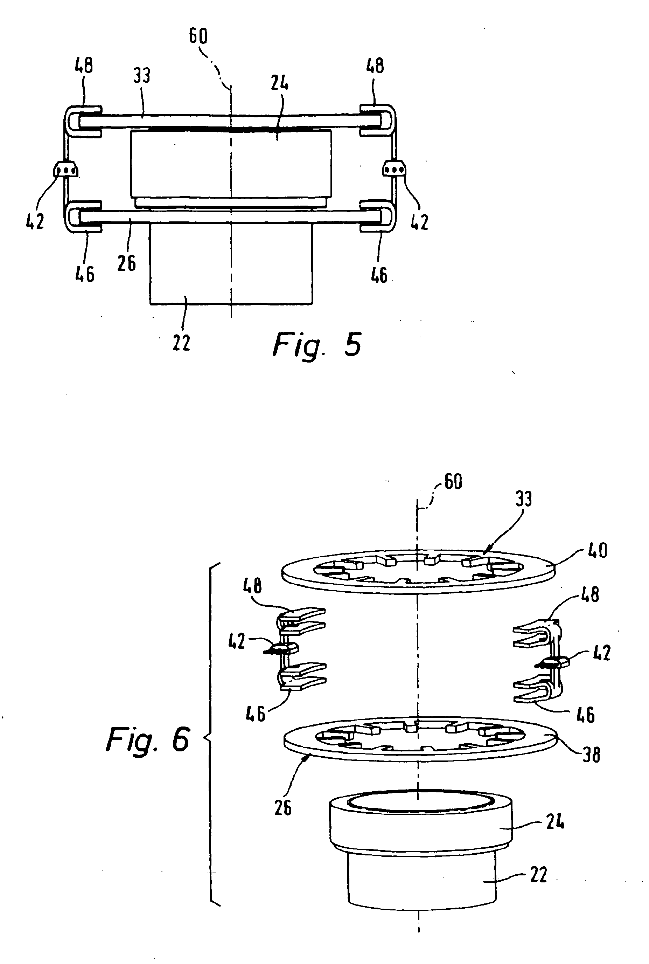

Die Figuren 5 und 6 zeigen den modularen Aufbau der erfindungsgemäßen Vorrichtung, wobei jedoch jedem Magnetflussring 38 beziehungsweise 40 zwei Magnetflusskonzentratoren 46 und 48 zugeordnet sind, die bezüglich der Längsachse 60 der Lenkwelle 10 einander gegenüberstehen. Auf diese Weise wird eine gewisse Redundanz des Systems geschaffen und eine Signalmittelung ist möglich.

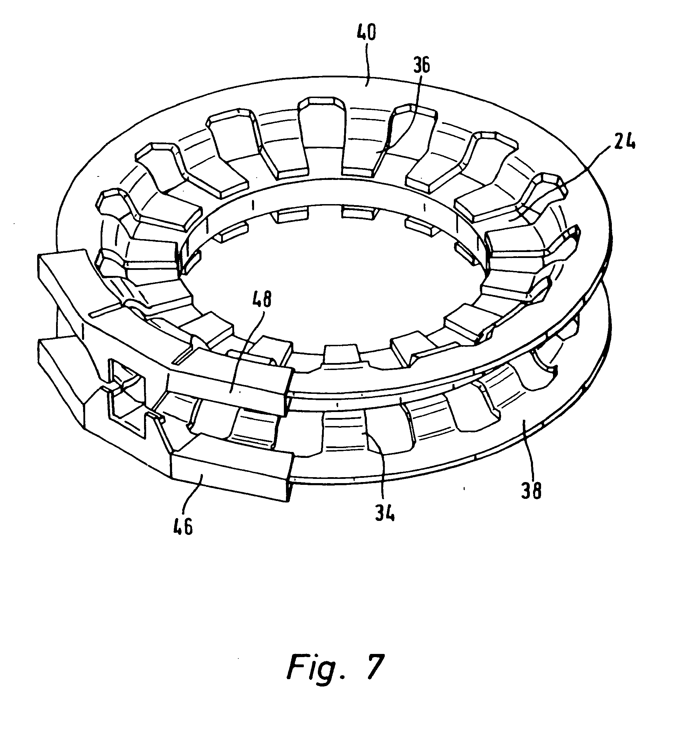

Bei der in der Figur 7 gezeigten Ausführungsform der erfindungsgemäßen Vorrichtung weisen die Magnetflussringe 38 und 40 radial nach innen und in Richtung auf den Magnetring 24 abgekröpfte Finger 34 und 36 auf. Hierdurch wird der Vorteil erzielt, dass die axiale Dimension des Magnetringes 24 wesentlich kleiner gehalten werden kann und dennoch genügend Platz zwischen den Magnetflusskonzentratoren 46 und 48 verbleibt, um den Magnetfeldsensor aufzunehmen. Durch das verringerte Magnetvolumen wird auch das Gesamtgewicht der Vorrichtung verringert und es werden die Kosten reduziert. Durch den nach wie vor großen Abstand der Magnetflussringe 38 und 40 ist gewährleistet, dass der magnetische Nebenschluss klein bleibt. Der Magnetring 24 kann nunmehr aus einem gesinterten Material bestehen, wodurch eine Felderhöhung erzielt wird.

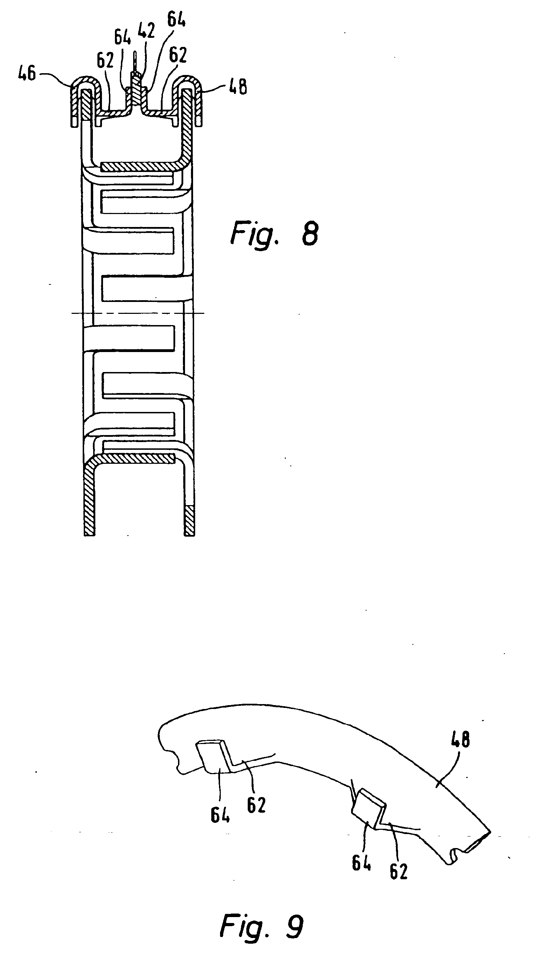

Die Figur 8 zeigt eine weitere Ausführungsform der Erfindung, bei der der Magnetfeldsensor 42 zwischen Laschen 62 befestigt ist, die von den einander zugewandten Seiten der Magnetflusskonzentratoren 46 und 48 abragen. Die beiden Laschen 62 erstrecken sich in etwa in axialer Richtung und sind einstückig an den Magnetflusskonzentratoren 46 und 48 vorgesehen. Die freien Enden 64 der Laschen 62 sind radial nach außen umgebogen und bilden jeweils eine Anlagefläche für den Magnetfeldsensor 42. Dies hat den wesentlichen Vorteil, dass ein großer Bereich geschaffen wird, in dem das Magnetfeld homogen ist. Außerdem sind Positionstoleranzen des Magnetfeldsensors 42 in tangentialer und in radialer Richtung unerheblich.

Die Figur 9 zeigt in perspektivischer Darstellung einen Magnetflusskonzentrator 48, an dem die Laschen 62 mit ihren freien Enden 64 angeformt sind. Die Fläche der freien Enden 64 ist etwa 3 x 3 mm² groß.

Aus der Figur 4 ist der Streufluss zwischen den Fingern 34 und 36 der beiden Magnetflussringe 38 und 40 in Richtung des Magnetfeldsensors 42 und der Laschen 62 dargestellt. Dieses Streufeld ändert entlang des Umfangs jeweils pro Magnetpol seine Richtung einwärts bzw. auswärts. Da die effektive Fläche des Magnetfeldsensors 42 nicht genau in der Symmetrieebene A sondern in der Regel zumindest geringfügig axial zu dieser versetzt liegt, wird ein Teil dieses Streufeldes vom Magnetfeldsensor 42 detektiert, was zu einer Modulation des Signals mit der Zahl der Magnetpole führt.

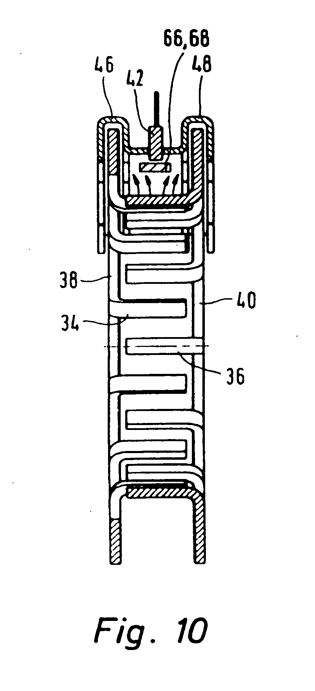

Die Figur 10 zeigt eine Abschirmvorrichtung 66 in Form eines Abschirmbleches 68, welches sich zwischen dem Magnetfeldsensor 42 und den Fingern 34 und 36 der beiden Magnetflussringe 38 und 40 befindet. Dadurch wird das auf den Magnetfeldsensor 42 einwirkende Streufeld eliminiert. Das Abschirmblech 68 besitzt eine Breite, die etwa 50 % des Abstandes der einander zugewandten Bereiche der beiden Magnetflusskonzentratoren 46 und 48 entspricht. Das Abschirmblech 68 ist außerdem der Länge nach gebogen und die Länge entspricht etwa dem Winkelsegment, über das sich die Magnetflusskonzentratoren 46 und 48 erstrecken.

Eine Verringerung des Einflusses des Streufeldes wird aber auch durch die abgebogenen freien Enden 64 der Laschen 62 erreicht, da dadurch der Magnetfeldsensor 42 radial weiter außen platziert werden kann.

## Patentansprüche

1. Vorrichtung zum Bestimmen eines auf eine Welle (10) ausgeübten Drehmoments, wobei die Welle (10) einen ersten Wellenabschnitt (14) und einen zweiten Wellenabschnitt (12) aufweist und die beiden Wellenabschnitte (12 und 14) gegeneinander verdrehbar sind, mit einem den ersten Wellenabschnitt (14) umgebenden und mit diesem verbundenen Multipol-Magnetring (24) und einem am zweiten Wellenabschnitt (12) befestigten Statorhalter (30), wobei an dem Statorhalter (30) zwei Statorelemente (26, 33) befestigt sind und jedes Statorelement (26, 33) in axialer oder radialer Richtung abragende Finger (34, 36) aufweist, die gleichmäßig zumindest über einen Teil des Umfangs verteilt angeordnet sind und zwischen sich Lücken aufweisen, wobei die Finger (34, 36) eines jeden Statorelements (26, 33) über einen Magnetflussring (38, 40) miteinander verbunden sind, die Magnetflussringe (38, 40) einen Abstand zueinander aufweisen und zwischen den Magnetflussringen (38, 40) ein Magnetfeldsensor (42) angeordnet ist, wobei dem Magnetfeldsensor (42) wenigstens ein Magnetflusskonzentrator (46, 48) zugeordnet ist, **dadurch gekennzeichnet, dass** der Magnetflusskonzentrator (46, 48) die Magnetflussringe (38, 40) umgreift.

2. Vorrichtung nach Anspruch 1, **dadurch gekennzeichnet, dass** der Magnetflusskonzentrator (46 oder 48) den Magnetflussring (38 oder 40) C-förmig umgreift.

3. Vorrichtung nach einem der vorhergehenden Ansprüche, **dadurch gekennzeichnet, dass** zwischen den Magnetflusskonzentratoren (46, 48) der Magnetfeldsensor (42) angeordnet ist.

4. Vorrichtung nach einem der vorhergehenden Ansprüche, **dadurch gekennzeichnet, dass** jedem Magnetflussring (38, 40) zwei oder mehr Magnetflusskonzentratoren (46, 48) zugeordnet sind.

5. Vorrichtung nach Anspruch 4, **dadurch gekennzeichnet, dass** die mehreren Magnetflusskonzentratoren (46, 48) gleichmäßig über den Umfang des Magnetflussringes (38, 40) angeordnet sind.

6. Vorrichtung nach einem der vorhergehenden Ansprüche, **dadurch gekennzeichnet, dass** der Magnetflusskonzentrator (46, 48) sich über 10° bis 180°, insbesondere 25° bis 90° über den Umfang des Magnetflussringes (38, 40) erstreckt.

7. Vorrichtung nach einem der vorhergehenden Ansprüche, **dadurch gekennzeichnet, dass** der Magnetflusskonzentrator (46, 48) in einem stationären Halter (44) angeordnet ist.

8. Vorrichtung nach Anspruch 7, **dadurch gekennzeichnet, dass** im Halter (44) zusätzliche Elektronikbauteile (52), eine Platine (50) hierfür, Steckkontakte (54) und/oder Lötstützpunkte vorgesehen sind.

9. Vorrichtung nach Anspruch 7 oder 8, **dadurch gekennzeichnet, dass** der Halter (44) sich über ein Gleitlager (56) am Statorhalter (30) abstützt.

10. Vorrichtung nach einem der vorhergehenden Ansprüche, **dadurch gekennzeichnet, dass** der Statorhalter (30) am freien Ende des zweiten Wellenabschnitts (12) auf einen Haltering (32) aufklipsbar oder aufrastbar ist.

11. Vorrichtung nach einem der vorhergehenden Ansprüche, **dadurch gekennzeichnet, dass** der Statorhalter (30) zusammen mit den Statorelementen (26, 33) an dem Haltering (32) angespritzt ist.

12. Vorrichtung nach einem der vorhergehenden Ansprüche, **dadurch gekennzeichnet, dass** die Magnetflusskonzentratoren (46, 48) ein Stanz-Biege-Blechteil sind oder ein Sinterteil oder ein MIM-Teil sind.

13. Vorrichtung nach einem der vorhergehenden Ansprüche, **dadurch gekennzeichnet, dass** der Magnetflusskonzentrator (46 oder 48) wenigstens eine in Richtung des anderen Magnetflusskonzentrators (48 oder 46) abragende Lasche (62) aufweist, an der der Magnetfeldsensor (42) befestigt ist.

14. Vorrichtung nach Anspruch 13, **dadurch gekennzeichnet, dass** die Lasche (62) in axialer Richtung vom Magnetflusskonzentrator (46 oder 48) abragt.

15. Vorrichtung nach Anspruch 13 oder 14, **dadurch gekennzeichnet, dass** beide Magnetflusskonzentratoren (46 oder 48) eine Lasche (62) aufweisen.

16. Vorrichtung nach Anspruch 15, **dadurch gekennzeichnet, dass** zwischen den beiden Magnetflusskonzentratoren (46 und 48) der Magnetfeldsensor (42) angeordnet ist.

17. Vorrichtung nach einem der Ansprüche 13 bis 16, **dadurch gekennzeichnet, dass** die Lasche (62) an ihrem freien Ende in radialer Richtung, insbesondere radial nach außen umgebogen ist.

18. Vorrichtung nach Anspruch 17, **dadurch gekennzeichnet, dass** das freie Ende der Lasche (62) eine Anlagefläche für den Magnetfeldsensor (42) aufweist.

19. Vorrichtung nach einem der vorhergehenden Ansprüche, **dadurch gekennzeichnet, dass** zwischen den Finger (34, 36) und dem Magnetfeldsensor (42) eine Abschirmvorrichtung, insbesondere ein weichmagnetisches Abschirmblech vorgesehen ist.

20. Vorrichtung nach Anspruch 19, **dadurch gekennzeichnet, dass** die Breite der Abschirmvorrichtung 25 % bis 75 %, insbesondere 50 % des Abstandes der beiden Magnetflusskonzentratoren (46 und 48) ist.

21. Vorrichtung nach Anspruch 19 oder 20, **dadurch gekennzeichnet, dass** die Abschirmvorrichtung koaxial zu den Statorelementen (26, 33) gebogen ist.

22. Vorrichtung nach einem der Ansprüche 19 bis 21, **dadurch gekennzeichnet, dass** die Abschirmvorrichtung sich über ein Winkelsegment erstreckt, das etwa dem entspricht, über welches sich die Magnetflusskonzentratoren (46 und 48) erstrecken.

## Claims

1. Apparatus for determining a torque exerted on a shaft (10), the shaft (10) having a first shaft section (14) and a second shaft section (12), and the two shaft sections (12 and 14) being capable of rotation with respect to one another, with a multipole magnetic ring (24), which surrounds the first shaft section (14) and is connected thereto, and a stator holder (30), which is fastened to the second shaft section (12), two stator elements (26, 33) being fastened to the stator holder (30), and each stator element (26, 33) having fingers (34, 36), which protrude in the axial or radial direction, are arranged so as to be distributed uniformly at least over part of the circumference and have gaps between them, the fingers (34, 36) of each stator element (26, 33) being connected to one another via a magnetic flux ring (38, 40), the magnetic flux rings (38, 40) having a distance from one another, and a magnetic field sensor (42) being arranged between the magnetic flux rings (38, 40), at least one magnetic flux concentrator (46, 48) being associated with the magnetic field sensor (42), **characterized in that** the magnetic flux concentrator (46, 48) surrounds the magnetic flux rings (38, 40).

2. Apparatus according to Claim 1, **characterized in that** the magnetic flux concentrator (46 or 48) surrounds the magnetic flux ring (38 or 40) in the form of a C.

3. Apparatus according to one of the preceding claims, **characterized in that** the magnetic field sensor (42) is arranged between the magnetic flux concentrators (46, 48).

4. Apparatus according to one of the preceding claims, **characterized in that** two or more magnetic flux concentrators (46, 48) are associated with each magnetic flux ring (38, 40).

5. Apparatus according to Claim 4, **characterized in that** the plurality of magnetic flux concentrators (46, 48) are arranged uniformly over the circumference of the magnetic flux ring (38, 40).

6. Apparatus according to one of the preceding claims, **characterized in that** the magnetic flux concentrator (46, 48) extends over the circumference of the magnetic flux ring (38, 40) through 10° to 180°, in particular 25° to 90°.

7. Apparatus according to one of the preceding claims, **characterized in that** the magnetic flux concentrator (46, 48) is arranged in a stationary holder (44).

8. Apparatus according to Claim 7, **characterized in that** additional electronic component parts (52), a printed circuit board (50) therefor, plug-type contacts (54) and/or soldering tabs are provided in the holder (44).

9. Apparatus according to Claim 7 or 8, **characterized in that** the holder (44) is supported on the stator holder (30) via a sliding bearing (56).

10. Apparatus according to one of the preceding claims, **characterized in that** the stator holder (30) can be clipped or latched onto a holding ring (32) at the free end of the second shaft section (12).

11. Apparatus according to one of the preceding claims, **characterized in that** the stator holder (30) is moulded onto the holding ring (32) by injection moulding together with the stator elements (26, 33).

12. Apparatus according to one of the preceding claims, **characterized in that** the magnetic flux concentrators (46, 48) are a stamped and bent sheet-metal part or a sintered part or an MIM part.

13. Apparatus according to one of the preceding claims, **characterized in that** the magnetic flux concentrator (46 or 48) has at least one lug (62), which protrudes in the direction of the other magnetic flux concentrator (48 or 46) and on which the magnetic field sensor (42) is fastened.

14. Apparatus according to Claim 13, **characterized in that** the lug (62) protrudes in the axial direction from the magnetic flux concentrator (46 or 48).

15. Apparatus according to Claim 13 or 14, **characterized in that** the two magnetic flux concentrators (46 or 48) have a lug (62).

16. Apparatus according to Claim 15, **characterized in that** the magnetic field sensor (42) is arranged between the two magnetic flux concentrators (46 and 48).

17. Apparatus according to one of Claims 13 to 16, **characterized in that** the lug (62) is bent back in the radial direction, in particular radially outwards, at its free end.

18. Apparatus according to Claim 17, **characterized in that** the free end of the lug (62) has a bearing surface for the magnetic field sensor (42).

19. Apparatus according to one of the preceding claims, **characterized in that** a screening apparatus, in particular a soft-magnetic screening plate, is provided between the fingers (34, 36) and the magnetic field sensor (42).

20. Apparatus according to Claim 19, **characterized in that** the width of the screening apparatus is 25% to 75%, in particular 50%, of the distance between the two magnetic flux concentrators (46 and 48).

21. Apparatus according to Claim 19 or 20, **characterized in that** the screening apparatus is bent coaxially with respect to the stator elements (26, 33).

22. Apparatus according to one of Claims 19 to 21, **characterized in that** the screening apparatus extends over an angular segment which approximately corresponds to that over which the magnetic flux concentrators (46 and 48) extend.

## Revendications

1. Dispositif pour déterminer un couple exercé sur un arbre (10), l'arbre (10) comportant un premier tronçon d'arbre (14) et un deuxième tronçon d'arbre (12) et les deux tronçons d'arbre (12 et 14) étant rotatifs l'un vers l'autre, et avec un anneau magnétique multipolaire (24) entourant le premier tronçon d'arbre (14) et étant relié à ce dernier et avec un support de stator (30) fixé sur le deuxième tronçon d'arbre (12), deux éléments de stator (26, 33) étant fixés sur le support de stator (30) et chaque élément de stator (26, 33) comportant des doigts (34, 36) saillant en direction axiale ou radiale, qui sont disposés en étant distribués régulièrement au moins sur une partie de la périphérie et présentant entre eux des interstices, les doigts (34, 36) de chaque élément de stator (26, 33) étant reliés les uns aux autres par un anneau à flux magnétique (38, 40), les anneaux à flux magnétique (38, 40) présentant entre eux un écart et un capteur de champ magnétique (42) étant disposé entre les anneaux à flux magnétique (38, 40), au moins un concentrateur de flux magnétique (46, 48) étant associé au capteur de champ magnétique (42), **caractérisé en ce que** le concentrateur de flux magnétique (46, 48) enveloppe les anneaux à flux magnétique (38, 40).

2. Dispositif selon la revendication 1, **caractérisé en ce que** le concentrateur de flux magnétique (46 ou 48) enveloppe l'anneau à flux magnétique (38 ou 40) en forme de C.

3. Dispositif selon l'une quelconque des revendications précédentes, **caractérisé en ce que** le capteur de champ magnétique (42) est disposé entre les concentrateurs de flux magnétique (46, 48).

4. Dispositif selon l'une quelconque des revendications précédentes, **caractérisé en ce qu'**à chaque anneau à flux magnétique (38, 40) sont associés deux ou plusieurs concentrateurs de flux magnétique (46, 48).

5. Dispositif selon la revendication 4, **caractérisé en ce que** les plusieurs concentrateurs de flux magnétique (46, 48) sont disposés régulièrement sur la périphérie de l'anneau à flux magnétique (38, 40).

6. Dispositif selon l'une quelconque des revendications précédentes, **caractérisé en ce que** le concentrateur de flux magnétique (46, 48) s'étend entre 10° et 180°, notamment entre 25° et 90° sur la périphérie de l'anneau à flux magnétique (38, 40).

7. Dispositif selon l'une quelconque des revendications précédentes, **caractérisé en ce que** le concentrateur de flux magnétique (46, 48) est disposé dans un support stationnaire (44).

8. Dispositif selon la revendication 7, **caractérisé en ce que** dans le support (44) sont prévus des composants électroniques (52) supplémentaires, une platine (50) à cet effet, des contacts à fiches (54) et/ou des plots à fourche.

9. Dispositif selon la revendication 7 ou 8, **caractérisé en ce que** le support (44) s'appuie par l'intermédiaire d'un palier à glissement (56) sur le support de stator (30).

10. Dispositif selon l'une quelconque des revendications précédentes, **caractérisé en ce que** sur l'extrémité libre du deuxième tronçon d'arbre (12), le support de stator (30) peut se clipser ou s'enclencher sur une bague de support (32).

11. Dispositif selon l'une quelconque des revendications précédentes, **caractérisé en ce que** le support de stator (30) est rapporté par injection, ensemble avec les éléments de stator (26, 33) sur la bague de support (32).

12. Dispositif selon l'une quelconque des revendications précédentes, **caractérisé en ce que** les concentrateurs de flux magnétique (46, 48) sont une pièce en tôle découpée pliée ou une pièce frittée ou une pièce MIM.

13. Dispositif selon l'une quelconque des revendications précédentes, **caractérisé en ce que** le concentrateur de flux magnétique (46 ou 48) comporte au moins une patte (62) saillant en direction de l'autre concentrateur de flux magnétique (48 ou 46) sur laquelle est fixé le capteur de champ magnétique (42).

14. Dispositif selon la revendication 13, **caractérisé en ce que** la patte (62) saillit en direction axiale à partir du concentrateur de flux magnétique (46 ou 48).

15. Dispositif selon la revendication 13 ou 14, **caractérisé en ce que** les deux concentrateurs de flux magnétique (46 ou 48) comportent une patte (62).

16. Dispositif selon la revendication 15, **caractérisé en ce qu'**entre les deux concentrateurs de flux magnétique (46 et 48) est disposé le capteur de champ magnétique (42).

17. Dispositif selon l'une quelconque des revendications 13 à 16, **caractérisé en ce que**, sur son extrémité libre, la patte (62) est recourbée en direction radiale, notamment radialement vers l'extérieur.

18. Dispositif selon la revendication 17, **caractérisé en ce que** l'extrémité libre de la patte (62) comporte une surface d'appui pour le capteur de champ magnétique (42).

19. Dispositif selon l'une quelconque des revendications précédentes, **caractérisé en ce qu'**entre les doigts (34, 36) et le capteur de champ magnétique (42), un dispositif de blindage, notamment une tôle de blindage magnétiquement douce est prévu.

20. Dispositif selon la revendication 19, **caractérisé en ce que** la largeur du dispositif de blindage correspond à de 25 % à 75 %, notamment à 50 % de l'écart entre les deux concentrateurs de flux magnétique (46 et 48).

21. Dispositif selon la revendication 19 ou 20, **caractérisé en ce que** le dispositif de blindage est recourbé coaxialement par rapport aux éléments de stator (26, 33).

22. Dispositif selon l'une quelconque des revendications 19 à 21, **caractérisé en ce que** le dispositif de blindage s'étend sur un segment angulaire qui correspond approximativement à celui sur lequel s'étendent les concentrateurs de flux magnétique (46 et 48).
